# EUROPEAN PATENT APPLICATION

(11) **EP 1 956 812 A1**
(43) Date of publication of application: **13.08.2008**
(21) Application number: 08001968.0
(22) Date of filing: 01.02.2008
(51) Int. Cl.: H04M 1/725, H04L 12/66, H04Q 7/32

(54) **Cellular telephone with reduced number of components**

(30) Priority: 12.02.2007 IT MI20070253
(71) Applicant: Sironi, Franco, 21047 Saronno (VA) (IT); Mariani, Paolo Andrea, 24040 Canonica d'Adda (BG) (IT)
(72) Inventor: Sironi, Franco, 21047 Saronno (VA) (IT); Mariani, Paolo Andrea, 24040 Canonica d'Adda (BG) (IT)
(74) Representative: Alagem Modiano, Lara S.

(57) **Abstract**

A cellular telephone (1) comprising a telephone body (2) adapted to be connected to a connection port of a personal computer, the telephone body (2) being provided with at least one slot (5) for accommodating at least one SIM card.

## Description

The present invention relates to a cellular telephone with reduced number of components. More particularly, the invention relates to a cellular telephone adapted to be interfaced with a personal computer and the like, having a reduced number of components and therefore an extremely limited space occupation.

As is known, cellular telephones are becoming increasingly widespread all over the world, and the costs of cellular telephones become correspondingly ever lower, but telephones at a truly reduced cost, adapted to constitute for example a second telephone for users, are not yet commercially available.

Moreover, often a user is working at the computer and at the same time has to answer the phone, using his own cellular telephone, or dial telephone number by using the normal cellular telephone. These operations can be awkward when using the personal computer and moreover force the user to have the cellular telephone with him.

The aim of the present invention is to provide a cellular telephone which has an extremely low number of components.

Within this aim, an object of the present invention is to provide a cellular telephone which has extremely reduced space occupation and dimensions with respect to known types of telephones.

Another object of the present invention is to provide a cellular telephone which can be interfaced directly with a personal computer and can utilize its potential.

Still another object of the present invention is to provide a cellular telephone which is highly reliable, relatively simple to provide and at competitive costs.

This aim and these and other objects which will become better apparent hereinafter are achieved by a cellular telephone, characterized in that it comprises a telephone body which is adapted to be connected to a connection port of a personal computer, said telephone body being provided with at least one slot for accommodating at least one SIM card.

Further characteristics and advantages of the invention will become better apparent from the description of a preferred but not exclusive embodiment of the cellular telephone according to the present invention, illustrated by way of non-limiting example in the accompanying drawings, wherein:
Figure 1 is an exploded perspective view of a cellular telephone according to the present invention;
Figure 2 is a block diagram of the cellular telephone according to the present invention with its connection possibilities illustrated;

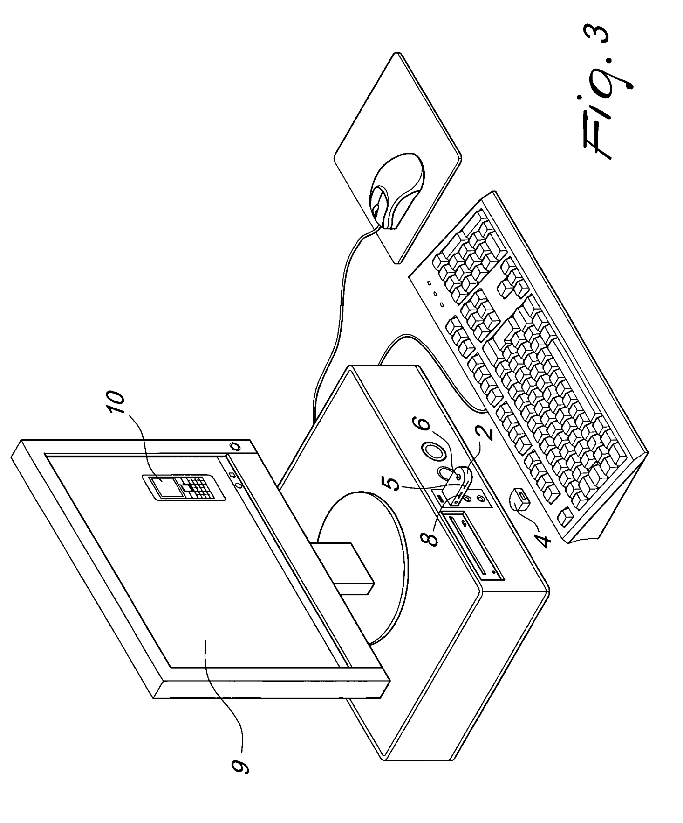

Figure 3 is a schematic view of the use of the cellular telephone with a personal computer.

With reference to the figures, the cellular telephone according to the present invention, generally designated by the reference numeral 1, comprises a telephone body 2, provided with means 3 for connection to a personal computer by way of a port of the personal computer. Conveniently, the connection means 3 can be a connector of the USB type for connection to a USB port of a personal computer. The body 2 of the telephone is completed by a protective cap 4, which is adapted to protect the USB connector 3.

Conveniently, the telephone body 2 is provided with at least one slot 5 for inserting at least one so-called SIM card, or user identification card, i.e., the telephone card that allows to make calls through a given telephone operator.

The telephone body 2 is provided with a power on/off button 6 and with a socket 7 for connecting an earpiece. The volume of the earpiece can be adjusted by means of a volume adjustment button 8.

The cellular telephone according to the present invention therefore does not have a display and a keypad and also does not have a battery.

The cellular telephone according to the present invention is in fact provided for connection to the USB port of a personal computer and therefore is adapted to be powered through the USB port, like a normal personal computer peripheral.

As regards the display and the keypad, the cellular telephone 1 according to the invention utilizes the display of the personal computer, designated by the reference numeral 9, and the keyboard of the personal computer, which is not indicated in the figures.

Substantially, the telephone body 2 comprises integrated and self-installing software which allows to display on the screen of the display of the personal computer a cellular telephone icon 10, with several buttons which can be used by means of the mouse or cursor of the personal computer.

In this manner, the user can make and receive calls directly by connecting the telephone body 2 to the USB port of the personal computer, thus utilizing its display and keyboard, to the benefit of the extremely small space occupation of the cellular telephone 1.

Conveniently, the telephone body includes an antenna 11 for receiving and transmitting calls.

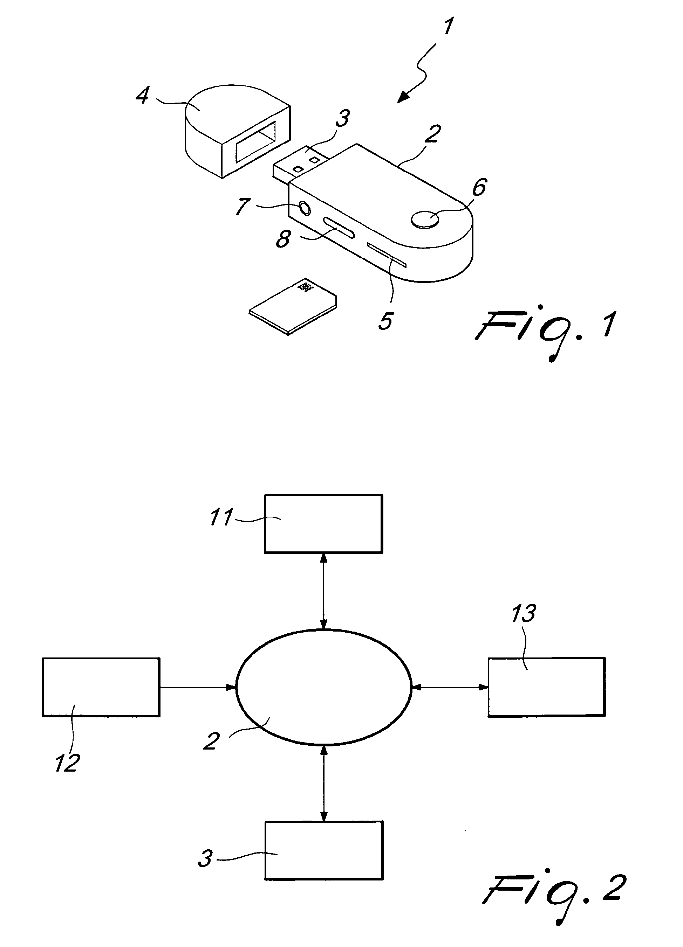

The reference numeral 12 in Figure 2 designates the so-called SIM card, which is inserted in the slot 5 of the telephone body 2, while the reference numeral 13 designates the headset or earpiece/microphone which can be connected to the earpiece socket 7 provided in the body 2 of the cellular telephone according to the invention.

The headset 13 is conveniently a headset with a microphone connected so as to be able to receive and make calls.

Substantially, the cellular telephone according to the invention allows to unify the two tools, i.e., the personal computer and the telephone, into a single tool, both at home and in the office, for sending SMS, MMS and making telephone calls even in hands-free mode, by means of the speakers and microphone normally built into all multimedia displays.

In practice it has been found that the cellular telephone according to the present invention fully achieves the intended aim and objects, since it is extremely compact and has a reduced number of components, as it has in fact eliminated the display, the keypad and the battery.

The cellular telephone thus conceived is susceptible of numerous modifications and variations, all of which are within the scope of the appended claims.

All the details may further be replaced with other technically equivalent elements. Thus, for example, the connection by way of the USB port of a personal computer can be replaced by a connection to any future port which might be devised for a personal computer, without altering the fact that the body of the cellular telephone is adapted to be interfaced with a personal computer.

The disclosures in Italian Patent Application No. MI2007A000253 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cellular telephone (1), **characterized in that** it comprises a telephone body (2) adapted to be connected to a connection port of a personal computer, said telephone body (2) being provided with at least one slot (5) for accommodating at least one SIM card.

2. The cellular telephone according to claim 1, **characterized in that** said telephone body (2) is provided with connection means (3) adapted to connect said telephone body (2) to said port of said personal computer.

3. The cellular telephone according to claim 1 or 2, **characterized in that** said cellular telephone is adapted to use the display and keyboard of said computer to make calls.

4. The cellular telephone according to one or more of the preceding claims, **characterized in that** the power supply of the cellular telephone is derived from said connection port of said personal computer.

5. The cellular telephone according to one or more of the preceding claims, **characterized in that** said connection port is a USB port.

6. The cellular telephone according to one or more of the preceding claims, **characterized in that** it comprises a cap (4) for protecting said means (3) for connecting the telephone body (2) to the port of the personal computer.

7. The cellular telephone according to one or more of the preceding claims, **characterized in that** it comprises a socket (7) for the connection of an earpiece/microphone.

8. The cellular telephone according to one or more of the preceding claims, **characterized in that** it comprises a button (8) for adjusting the volume of said earpiece.

9. The cellular telephone according to one or more of the preceding claims, **characterized in that** it comprises a button (6) for switching said cellular telephone on/off.
